# EUROPÄISCHE PATENTSCHRIFT

(11) **EP 2 847 378 B1**
(45) Veröffentlichungstag und Bekanntmachung des Hinweises auf die Patenterteilung: **11.12.2024**
(21) Anmeldenummer: 13723687.3
(22) Anmeldetag: 29.04.2013
(51) Int. Cl.: D06N 7/00, B60N 3/04, B32B 5/26

(54) **KRAFTFAHRZEUG-TEPPICHBODEN**
MOTOR VEHICLE CARPET
MOQUETTE POUR VÉHICULES AUTOMOBILES

(30) Priorität: 09.05.2012 DE 202012004594 U
(43) Veröffentlichungstag der Anmeldung: 18.03.2015
(73) Patentinhaber: Adler Pelzer Holding GmbH, 58099 Hagen (DE)
(72) Erfinder: SCHULZE, Volkmar, 84069 Schierling (DE); NICOLAI, Norbert, 46514 Schermbeck-Gahlen (DE); FEOLE, André, I-36100 Vicenza (IT); FORNASA, Fabrizio, I-36035 Marano Vincentino (IT); FILOTTO, Federica, I-36025 Marano Vicentino (IT)
(74) Vertreter: Hannke Bittner & Partner mbB Regensburg
(86) Internationale Anmeldenummer: PCT/EP2013/058865
(87) Internationale Veröffentlichungsnummer: WO 2013/167408

(56) Entgegenhaltungen:
- EP-A2- 0 902 115
- WO-A1-2008/109758
- WO-A1-93/12285
- WO-A1-98/55291
- WO-A1-99/42330

## Beschreibung

Die vorliegende Erfindung betrifft einen Kraftfahrzeug-Teppichboden-Materialaufbau für Schallisolierungen für den Kraftfahrzeuginnenraum und Kraftfahrzeuggepäckraum, der es ermöglicht, eine vollständige Wiederaufarbeitung des Gesamtverbundes, insbesondere des Fasermaterials, industriell umzusetzen.

Teppichböden gehören zum festen Bestandteil eines Kraftfahrzeuges. Üblicherweise besteht der Aufbau aus drei verschiedenen "Schichten".

Dem Fahrgast zugewandt ist die Nutzschicht, die aus Garnen oder Fasern und gegebenenfalls einem Träger besteht. Die Fasern können üblicherweise entweder natürlich sein (tierisch: Schurwolle, pflanzlich: Baumwolle oder Jute) oder aber synthetisch (Polyamid, Polyester, Polypropylen). Auch Mischgarne sind möglich, wie beispielsweise Polyamid und Schurwolle. Auch kommen "robuste" Nutzschichten zum Einsatz, die vorwiegend aus un- und vernetztem TPO, mit und ohne Oberflächen"narbung" bestehen.

Die "Mittelschicht" besteht zumeist aus einer oder mehreren Klebemassen, mit deren Hilfe die Faserkonstruktion im Trägergewebe fixiert wird. Als Kleber dient meist ein synthetisches Gummi (SBR-Latex). Aber auch Natur-Latex, kann als Kleber dienen. Oft wird eine zweite Klebeschicht verwendet, um das Rückenmaterial ein- /anzubinden, das meist wieder aus synthetischem oder natürlichem Latex besteht. Auch kann PVC die Nutz- und die Rückenschicht verbinden; des Weiteren kommen PE, EVA und PP zur Anwendung.

Die Rückenschicht ist in aller Regel ebenfalls aus aufgeschäumtem SBR-Latex. Manchmal wird aber auch eine Mischung aus nicht geschäumtem synthetischen und natürlichem Latex verwendet. Auch Textilrücken aus Naturfasern, wie beispielsweise Jute, und Mischfasern werden genutzt. Weiterhin findet man Dicht- und Schwerfolien sowie Kontaktschichten vor.

Die Wiederaufbereitung von derart heterogenen Teppichböden aus den verschiedensten Materialien ist problematisch.

Bei den heute auf dem Markt befindlichen Kfz findet man verschiedene Ausprägungen von Teppichböden, insbesondere Tufting-, Dilour- und Flachnadelvlies-Teppiche, vor. Bei Tufting-Teppich wird PA6.6, PA6, PP, rPA und rPET; und bei den Dilour- und Flachnadelvlies-Teppichen PET, PET/PP, PP und rPET vorwiegend eingesetzt.

Der Tuftingträger bei den Tufting-Qualitäten besteht aus PET/PP, PET/coPET oder PET/PA. Für die Garn-/Fasereinbindung wird bei Tufting-Teppich vorwiegend EVA und bei den Dilour- und Flachnadelvlies-Teppichen SBR-Latex oder Acrylat eingesetzt. Die Beschichtung, meist als Klebeschicht für Untervliese, aber auch zur Versteifung, umfasst vorwiegend PE oder PP; gegebenenfalls auch Schwerschicht auf der Basis von EVA, PE, PP, EPDM. Die Untervliese umfassen zumeist PET- oder Baumwollfasermischvliese.

Die Isolation, insbesondere im Bodenverkleidungssystem, kann zum einen ein Schaum, und zum anderen ein Faserverbund sein. Bei den Schäumen kommen viskoelastische oder hoch-elastische, vereinzelt auch Leichtschäume zum Einsatz. Bei dem Einsatz von Schäumen sind zwischen der Oberware und der Schaumisolation Dichtfolien, Folienvliese oder sogenannte Kontaktvliese im Einsatz. Bei den Vliesisolationen findet man unverformte (plane), (vor-)verformte Platinen sowie Isolationen, hergestellt im Faser-Flock-Verfahren vor.

Derartige Bodenverkleidungssysteme sind beispielsweise beschrieben in DE 10 2004 046 201 A, DE 103 60 427 A, DE 199 60 945 A und DE 10 2007 036 952 A.

In den US 2008/0220200 A, US 2008/0223654 A und US 2008/0292831 A werden Teppich- / Bodenverkleidungssysteme beschrieben, bei denen die getuftete Oberware und die Isolation PETbasierend sind. Der Tuftingträger besteht vorzugsweise aus PET, einer Polyolefin-Faser (PE) oder einer anderen geeigneten synthetischen Faser. Die Einbindung des Garns erfolgt mittels geschäumtem Latex oder Acrylat sowie PE. Als weitere Beschichtungsmaterialien im Verbund finden PE oder ein EVA/PE-Gemisch Anwendung. Bei der Einbindung mittels PE-Extrusion (direkt extrudierter PE-Folie/Schicht) werden die Fasern angeschmolzen, somit entsteht eine "starr" verhakte Pol- /Faserunterseite. Auch kann das Bindematerial (PE) nur bedingt teilweise in den Faserverbund eindringen. Bei der Verformung des Teppichs kann es zum Brechen der "starr" verhakten Pol- /Faserunterseite kommen, und damit drastisch das Verschleißverhalten und natürlich die Optik verschlechtert wird. Die Bodenverkleidung, die Gepäckraumverkleidung sind damit unbrauchbar. Speziell in US 2008/0223654 A finden im Verbund Schwerfolien, PVC/EVA/PE, Anwendung; des Weiteren perforierte und unperforierte Folienschichten aus PA, PE und/oder PET.

Die im Stand der Technik bekannten technischen Lösungen sind keine "Einstoff-Systeme"; diese Verbunde beinhalten die unterschiedlichsten Polymere. Insbesondere werden neben PE und EVA zur Fasereinbindung SBR-Latex und Acrylat eingesetzt, was eine Wiederaufarbeitung des Verbundes praktisch nicht möglich macht. Damit ist eine optimale Wiederaufarbeitung des Fasermaterials nicht realisierbar.

Weiterhin besteht folgender Nachteil der Garn-Einbindung beim Tufting-Teppich mittels Folie bzw. Extrusionsfolie:
Um eine Verbindung zwischen den PET-Fasern bzw. der Garnnoppe an der Unterseite des Teppichs zu erzielen, muss diese praktisch angeschmolzen werden. Das hat jedoch zur Folge, dass die Garnnoppe im unteren Bereich nicht nur plastifiziert verklebt, sondern "glasartig" angeschmolzen ist. Hieraus erklärt sich auch die Verschlechterung der Abriebwerte, somit des höheren Verschleißes. Die Einzelfaser verliert über eine kurze, aber wichtige Distanz ihre guten technologischen Eigenschaften (Dehnung, Reißkraft ...); und im Belastungsfall kann es vermehrt zum Faserbruch führen. Die steife Extrusionsfolie (starre Fixierung) neigt zum "Bimetalleffekt" im Formteil; weniger Formstabilität bei Temperaturschwankungen; auch Gefahr für Faser- /Filamentbruch.

Das trifft natürlich auch auf den Nadelvlies-Teppich zu, bei dem jedoch keine Garnnoppen, sondern Einzelfasern vorliegen.

Der vorliegenden Erfindung liegt die Aufgabe zugrunde, einen Teppich-Materialaufbau für Schallisolierungen zu realisieren, der 100%-ig, relativ einfach, wiederaufarbeitbar (recyclebar) ist; verbunden mit einer Verringerung des Waren-Gesamt-Gewichts und dem Erreichen akustischer (absorptiver) Vorteile.

Erfindungsgemäß wird diese Aufgabe insbesondere gelöst, in dem der Teppich-Materialaufbau aus PET-Fasermaterial mit hohem Recyclinganteil besteht; und insbesondere die Fasereinbindung eine PET-Dispersion ist. Diese Applikation des geschäumten Fasereinbindungsmittels erlaubt sowohl das Erreichen der optimalen Bindung (flexibel) als auch einen Dampf-/Hitzeprozess zur Ausschrumpfung des Garns und eine Erzielung des optimalen Bulks der Fasern.

Eine erste Ausführungsform der Erfindung besteht in einem Kraftfahrzeug-Teppichboden gemäß Anspruch 1.

Eine PET-basierende Dispersion wird zur Einbindung des PET-Garnes (Tufting) / der PET-Fasern (Dilour, Flachnadelvlies) sowie für gegebenenfalls weitere Klebeschichten eingesetzt.

Damit hat man in der Produktion ein einfaches Handling, und der Verbund, insbesondere die Rohstoffe sind zu 100% optimal wieder verwertbar. Die Fasereinbindung ist flexibel, die Einzelfasern sind punktförmig gebunden und nicht (starr) verschmolzen. Des Weiteren liegt damit ein 100%-ig sortenreiner (PET) Materialverbund vor; d.h. sowohl Fasermaterial wie auch Einbindungs- und Klebematerial sind aus diesem Material hergestellt. Das trifft insbesondere auch für Tufting zu, da der Träger aus PET/coPET besteht.

Eine PET-Dispersion als Einbindung, ermöglicht bei verhältnismäßig niedrigen (Verarbeitungs-) Temperaturen eine gute Polverankerung und Klebereinbettung im Faserverbund. Damit wird die Flexibilität des Teppichs / Teppichverbundes weitgehend erhalten; es werden optimale Abriebwerte erreicht.

Bei der Applikation der Einbindung (PET-Dispersion) verdampft der wässrige Anteil und man erzielt somit (automatisch) das Ausschrumpfen des Garnes / der Fasern mit optimalem Oberflächeneffekt.

Ein Vorteil der PET-Dispersionsbeschichtung mit gezielt eingestelltem Schmelzbereich, das heißt niedriger Temperatur, ist es, dass kein Anschmelzen der Fasern / des Garns erfolgt. Man hat eine hohe Flexibilität der Fasern, eine ziemlich homogene Masse; und damit keinen "Bimetalleffekt".

Die Art des Teppichbodenaufbaus der vorliegenden Erfindung kann sich nach den jeweiligen Gegebenheiten richten. Vornehmlich wird im Sinne der vorliegenden Erfindung ein Teppichboden aus einer Tufting-, Dilour- oder Flachnadelvlies-Oberware sowie einer oder mehrere Klebe- und Vliesschichten sowie der Isolation, einer Vliesisolation, hergestellt. Damit ist das Gesamtsystem PET basierend, insbesondere der Tufting-Träger ein PET/coPET Stapelfaser-Vlies oder Spinn-Vlies. Auch die Faser-Garn-Einbindung sowie die Klebeschichten basieren auf PET-Dispersionen. Zur Schonung von Material-Resourcen können die PET-Fasern aus recycliertem PET bestehen. Daneben ist es naturgemäß auch möglich, die PET-Fasern aus 'jungfräulichem' PET oder auch aus Mischungen aus 'jungfräulichem' und recycliertem PET herzustellen.

Besonders bevorzugt im Sinne der vorliegenden Erfindung ist es, die Faser-/Garn-Einbindung und die Klebeschichten jeweils in Form einer PET-Pulver-Wasserdispersion herzustellen, die dabei unterschiedlich einstellbare Schmelzpunkte aufweisen.

Im Sinne der vorliegenden Erfindung ist es besonders bevorzugt, wenn die Vlies-Unterschichten auf der Basis PET/rPET-Absoptions- /Versteifungsvliesen bestehen, die gegebenenfalls auch recyclierte PET Fasern enthalten. Für eine gute Schallabsorption ist es im Sinne der vorliegenden Erfindung besonders bevorzugt, wenn das Gesamtsystem der Schallisolierung (akustisch) strömungsoffen ist.

In gleicher Weise wie die vorstehend diskutierten Teppichböden können im Sinne der vorliegenden Erfindung auch Fußmatten, sowie Gepäckraumverkleidungen ausgestaltet werden.

Nachfolgend wird die Erfindung anhand von Beispielen erläutert.

### Ausführungsbeispiele:

### Beispiel 1:

Ein Tuftingteppich 1 wurde mit einer PET/rPET-Garnstärke 2 von 1020 dtex , 127 Filamenten und einer Teilung von 5/64" bei Nutzung eines 120 g/m² PET/coPET-Trägers 3 mit einem Polgarnendgewicht (Flor 2) von 305 g/m² hergestellt. Die Einbindung erfolgte mittels Walzenauftrag von 100 g/m² coPET-Dispersion 4; zur Verbesserung des Absorptions-/Versteifungsverhaltens wurde ein 360 g/m² PET/coPET-Vlies 5 zukaschiert. Die Verformung des Verbundes zu einer Kraftfahrzeug-Bodenverkleidung erfolgte mit einer vollautomatischen Thermoverformungsanlage; in den Prozessschritten Ablängen von Teppich und Vlies, Kaschierung in einer Kaschierheizpresse, anschließendem Erwärmen in einem IR-Heizfeld und nachfolgender Verformung. Die Prüfung des Abriebes als eines der Qualitätsmerkmale ergab 0,180 g.

| Prüfbedingungen in Anlehnung an DIN 53 754 | | |
|---|---|---|
| nach PrA-014 | Cyclen N | 1000 |
| | Drehzahl n | 60 min⁻¹ |
| | Belastung F | 2 x 1000 g |
| | Reibrad Typ | H18 |
| Sollwerte: | Abrieb | ≤ 0,3 |

### Beispiel 2:

Ein weiterer Tuftingteppich 1 wurde mit einer PET/rPET-Garnstärke 2 von 1300 dtex , 127 Filamenten und einer Teilung von 1/10" bei Nutzung eines 120 g/m² PET/coPET-Trägers 3 mit einem Polgarnendgewicht von 305 g/m² hergestellt. Die Einbindung erfolgte mittels Walzenauftrag von 100 g/m² coPET-Dispersion 4; zur Verbesserung des Absorptions-/Versteifungsverhaltens wurde ein 360 g/m² PET/coPET-Vlies 5 zukaschiert. Die Verformung erfolgte wie in Beispiel 1. Die Abriebprüfung ergab 0,210 g.

### Beispiel 3:

Mittels Faser-Flock-Verfahren wurden entsprechende PET/rPET-Faser-Isolationen 6 mit 15% PET/BiCo-Faseranteil hergestellt.

Damit bestand das Bodenverkleidungssystem (Oberware+Isolation) aus einem PET-Einstoffsystem. Die vollständige Wiederaufarbeitung ist gegeben. Damit, und durch den Recycling-PET-(rPET)-Fasereinsatz wird man dem Anspruch auf "Nachhaltigkeit" und "Green" voll gerecht.

### Beispiel 4:

Ein Diloursteppich (nicht dargestellt) wurde mit 6,7 / 11 dtex PET/rPET-Fasern 2 hergestellt; und mittels Foulard eine 100 g/m2 coPET-Dispersion 4 aufgetragen. Auch hier wurde zur Verbesserung des Absorptions-/Versteifungsverhaltens ein 360 g/m² PET/coPET-Vlies 5 zukaschiert. Neben dem Fasermix im PET/rPET, wendete man auch PET/BiCo-Fasern (Bindefasern) mit im Verbund an.

Die Verformung erfolgte wie im ersten Beispiel. Die Abriebprüfung ergab 0,260 g.

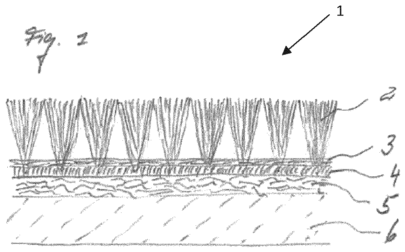

## Patentansprüche

1. Kraftfahrzeug-Teppichboden (1) mit
- einer Nutzschicht (2) einer Tufting-, Dilour- oder Flachnadelvlies-Oberware, die aus Polyethylenterephthalat (PET)-Garnen und/oder -Fasern besteht,
- einer Trägerschicht (3), die aus Polyethylenterephthalat und/oder einem copolymeren Polyethylenterephthalat besteht,
- einer ersten Klebeschicht (4), die aus einem Polyethylenterephthalat basierenden Kleber besteht,
- gegebenenfalls weiteren vorhandenen Klebeschichten (Mittelschicht) (4), die aus einem Polyethylenterephthalat basierenden Kleber bestehen,
- einer Rückenschicht (5), die aus einem auf Polyethylenterephthalat basierenden Faservlies oder Gewebe besteht, und
- einer Isolationsschicht (6), die aus PET/coPET Fasern besteht,
**dadurch gekennzeichnet, dass**
die Klebeschichten aus einer PET-Dispersion sind, und
Einzelfasern der Nutzschicht (2) punktförmig gebunden und nicht (starr) verschmolzen sind, und eine Fasereinbindung daher flexibel ist.

2. Teppichboden (1) nach Anspruch 1, **gekennzeichnet durch** einen Tufting-Träger (3), der ein PET/coPET Stapelfaser-Vlies oder Spinn-Vlies umfasst.

3. Teppichboden (1) nach einem der Ansprüche 1 bis 2, **dadurch gekennzeichnet, dass** die PET-Fasern (2) jungfräuliches oder recycliertes PET oder deren Mischung umfassen, insbesondere daraus bestehen.

4. Teppichboden (1) nach einem der Ansprüche 1 bis 3, **dadurch gekennzeichnet, dass** das Gesamtsystem Schallisolierung (akustisch) strömungsoffen ist.

## Claims

1. Motor vehicle carpet (1) with
- a wear layer (2) of a tufted, dilour or flat needle-punched nonwoven outer fabric consisting of polyethylene terephthalate (PET) yarns and/or fibers,
- a carrier layer (3) consisting of polyethylene terephthalate and/or a copolymeric polyethylene terephthalate,
- a first adhesive layer (4) consisting of a polyethylene terephthalate-based adhesive,
- if necessary, further adhesive layers (middle layer) (4) consisting of a polyethylene terephthalate-based adhesive,
- a backing layer (5) consisting of a polyethylene terephthalate-based nonwoven or woven fabric, and
- an insulating layer (6) consisting of PET/coPET fibers,
**characterized in that**
the adhesive layers are made of a PET dispersion, and
individual fibers of the wear layer (2) are point-bonded and not (rigidly) fused, and a fiber bond is therefore flexible.

2. Carpet (1) according to claim 1, **characterized by** a tufting carrier (3) comprising a PET/coPET staple fiber nonwoven or spunbonded nonwoven.

3. Carpet (1) according to one of claims 1 to 2, **characterized in that** the PET fibres (2) comprise virgin or recycled PET or a mixture thereof, in particular consist thereof.

4. Carpet (1) according to one of claims 1 to 3, **characterized in that** the overall sound insulation system is (acoustically) open to flow.

## Revendications

1. Moquette pour véhicule à moteur (1) avec
- une couche d'usure (2) d'un textile supérieur en fil tufté, en Dilour ou en non-tissé aiguilleté à plat, qui est constituée de fils de PET (polytéréphtalate d'éthylène) et/ou de fibres,
- une couche de support (3), qui est constituée de polytéréphtalate d'éthylène et/ou d'un polytéréphtalate d'éthylène copolymère,
- une première couche de colle (4), qui est constituée d'une colle à base de polytéréphtalate d'éthylène,
- éventuellement d'autres couches de colle présentes (couche centrale) (4), qui sont constituées d'une colle à base de polytéréphtalate d'éthylène,
- une couche arrière (5), qui est constituée d'un non-tissé en fibres ou d'un tissu à base de polytéréphtalate d'éthylène, et
- une couche d'isolation (6), qui est constituée de fibres de PET/CoPET,
**caractérisée en ce que**
les couches de colle sont composées d'une dispersion en PET, et
des fibres individuelles de la couche d'usure (2) sont liées de manière ponctuelle et ne sont pas fondues (de manière rigide) et une intégration de fibres est par voie de conséquence flexible.

2. Moquette (1) selon la revendication 1, **caractérisée** en par un support en fil tufté (3), qui comprend un non-tissé à fibres discontinues ou un filé-lié de PET/CoPET.

3. Moquette (1) selon l'une quelconque des revendications 1 et 2, **caractérisée en ce que** les fibres de PET (2) comprennent du PET vierge ou recyclé ou leur mélange, en particulier en sont constituées.

4. Moquette (1) selon l'une quelconque des revendications 1 à 3, **caractérisée en ce que** l'isolation acoustique de système global est à libre circulation.
